# EUROPÄISCHE PATENTSCHRIFT

(11) **EP 1 047 307 B1**
(45) Veröffentlichungstag und Bekanntmachung des Hinweises auf die Patenterteilung: **10.07.2002**
(21) Anmeldenummer: 98966535.1
(22) Anmeldetag: 08.12.1998
(51) Int. Cl.: A23P 1/08, A23L 1/31, A21D 13/08, A21C 3/00, A23K 1/10, A23L 1/317, A23L 1/325, A23P 1/12

(54) **VERFAHREN ZUR HERSTELLUNG EINES FUTTER- ODER LEBENSMITTELS SOWIE DANACH HERSTELLBARES PRODUKT**
METHOD FOR PRODUCING AN ANIMAL FEED OR FOOD ITEM AND A PRODUCT PRODUCED ACCORDING TO SAID METHOD
PROCEDE POUR PRODUIRE UN ALIMENT POUR ANIMAUX OU UNE DENREE ALIMENTAIRE ET PRODUIT AINSI OBTENU

(30) Priorität: 08.01.1998 DE 19800390
(43) Veröffentlichungstag der Anmeldung: 02.11.2000
(73) Patentinhaber: Mars, Inc., McLean, VA 22101-3883 (US)
(72) Erfinder: SCHLEBUSCH, Johannes, P., D-28209 Bremen (DE); RONKEN, Andreas, D-27283 Verden (DE); HEMUS, John, D-27308 Kirchlinteln (DE); LUTTMANN, Jürgen, D-27308 Kirchlinteln (DE)
(74) Vertreter: Goddar, Heinz J., Dr.
(86) Internationale Anmeldenummer: DE9803648
(87) Internationale Veröffentlichungsnummer: WO9934695

(56) Entgegenhaltungen:
- US-A- 4 113 819
- US-A- 4 141 999
- US-A- 4 196 222
- US-A- 4 784 862
- US-A- 5 209 156
- US-A- 5 480 662
- PATENT ABSTRACTS OF JAPAN vol. 006, no. 174 (C-123), 8. September 1982 & JP 57 091153 A (OSADA MASAFUMI), 7. Juni 1982

## Beschreibung

Die Erfindung betrifft ein Verfahren zur Herstellung eines Futter- oder Lebensmittels sowie ein danach herstellbares Produkt.

In der Futter- und Lebensmittelindustrie stellt sich in vielfältiger Weise das Problem, einfach und effizient Produkte herstellen zu können, die aus vielen dicht übereinanderliegenden oft sehr dünnen Lagen bestehen, zwischen denen jeweils oder zumindest teilweise eine dünne Luft- oder Flüssigkeitsschicht verbleibt.

Ein klassisches Beispiel ist der Blätterteig. Dieser ist insbesondere auch ein klassisches Beispiel für die Aufwendigkeit traditioneller Herstellungsverfahren für solche Produkte. Auch wenn die maschinelle Herstellung von Blätterteig heutzutage schon einen großen Fortschritt darstellt, so sind die bekannten Verfahren doch immer noch relativ aufwendig und störungsanfällig.

U.S. 5,480,662 beschreibt einen laminierten Teig, bei dem sich Teigschichten mit Schichten aus einem wäßrigen Gel bestimmter Zusammensetzung abwechseln. Dabei wird darauf hingewiesen, daß die rheologischen Eigenschaften des Gels nicht zu unterschiedlich von denjenigen des Teigs sein sollten, um eine befriedigende Laminatstruktur zu erhalten.

U.S. 4,113,819 beschreibt ebenfalls ein Verfahren zur Herstellung mehrschichtiger Teigmaterialien.

Ein weiterer Einsatzbereich sind Produkte, die unter Verwendung von Fleischemulsionen hergestellt werden.

Fleischemulsionen werden in der Futter- und Lebensmittelindustrie, insbesondere auf dem Gebiet der Futtermittel für Haustiere, seit langem in großem Umfang eingesetzt. Dabei besteht das Bedürfnis, einen möglichst hohen Anteil an fleischlichen Rohmaterialien zu verwenden, ggf. in Kombination mit pflanzlichen Proteinen, da diese wichtige Nährstoffträger für Protein, Mineralstoffe, Spurenelemente, Fett und Vitamine darstellen, hochverträglich und hochverdaulich sowie gleichzeitig sehr schmackhaft sind und damit eine optimale Basis für eine ausreichende Nährstoffaufnahme zur Verfügung stellen.

Das allgemeine Problem in diesem Zusammenhang besteht darin, daß nicht-vorbehandelte fleischliche (oder fischige) Rohmaterialien während des unumgänglich notwendigen Sterilisationprozesses bei der Herstellung entsprechender Produkte ihre ursprüngliche Textur nahezu vollständig verlieren. Diese ist aber ein wesentlicher Faktor für die Akzeptanz bei Mensch und Tier.

Aus der EP-0 265 740 ist ein Verfahren zur Herstellung eines Fleischemulsionsproduktes bekannt, bei dem eine Fleischemulsion bestimmter Zusammensetzung rasch auf Temperaturen oberhalb von 100°C, vorzugsweise zwischen 104 und 118°C, erhitzt wird. Bei dieser Temperatur koagulieren und denaturieren sowohl die tierischen als auch die pflanzlichen Proteine in der Emulsion mit sehr schneller Geschwindigkeit. Die heiße Emulsion wird anschließend in ein Prozeßrohr gepumpt, in dem sie unter Überdruck bis zur vollständigen Koagulation der Proteine verbleibt. Frühzeitige Koagulation und Denaturierung der Proteine in der Emulsion hat sich aus ernährungsphysiologischen Gründen allerdings als nachteilig herausgestellt. Insbesondere die fleischlichen Rohmaterialien verlieren bei einem derartigen Herstellungsprozeß deutlich an Textur, was bei den bekannten Verfahren im nachhinein durch einen energie- und arbeitsaufwendigen Prozeßschritt der kontrollierten Verdampfung von in der Emulsion vorhandenem Wasser bzw. zusätzliche Injektion von Heißdampf zur Erzeugung einer schichtähnlichen Struktur mit allerdings nur mäßigem Erfolg wieder auszugleichen versucht wird.

Aus dem DBP 39 33 528 ist ein Verfahren bekannt, bei dem eine Fleischemulsion durch einen Spalt zwischen den Platten eines Hochgeschwindigkeitsemulgators in ein Prozeßrohr gedrückt und dabei schnell auf 40 bis 75°C erhitzt wird, wobei die in Ausgangsmaterialien enthaltenen Proteine im wesentlichen tierischen Ursprungs sind und hinsichtlich Temperatur und Zeitdauer unterschiedliche Koagulationsverhalten zeigen. Obgleich sich mit diesem Verfahren Produkte mit einer verbesserten Textur und ernährungsphysiologisch besseren Eigenschaften erhalten lassen als mit dem zuvor beschriebenen Verfahren, bestehen nach wie vor erhebliche Unterschiede zu natürlich geschnittenen Fleisch- oder Fischstücken, insbesondere im Hinblick auf die Textur. Darüber hinaus ist das bekannte Verfahren relativ schwierig zu steuern und führt nicht zu gleichbleibend guten Ergebnissen.

Der Erfindung liegt die Aufgabe zugrunde, bekannte Verfahren zur Herstellung von Futteroder Lebensmitteln, wie sie oben beschrieben sind, dahingehend zu verbessern, daß sie zu überlegenen Produkten führen und/oder die Verfahrensführung sich wesentlich kostengünstiger und effizienter gestaltet.

Erfindungsgemäß wird diese Aufgabe bei einem gattungsgemäßen Verfahren durch die im Kennzeichen von Anspruch 1 aufgeführten Verfahrensschritte gelöst.

Bevorzugte Ausführungsformen ergeben sich aus den Unteransprüchen.

Die Erfindung betrifft weiterhin ein nach dem erfindungsgemäßen Verfahren herstellbares Futter- oder Lebensmittel.

Die grundlegende Idee der Erfindung beruht darauf, daß es überraschenderweise effizient und kostengünstig möglich ist, die gewünschten Produkte dadurch herzustellen, daß mindestens zwei viskose Massen, die sich unter entsprechenden Verfahrensbedingungen unterschiedlich verhalten, nämlich sich zum einen verfestigen, zum anderen verflüssigen, mit einem geeigneten Mischverfahren vermischt werden, das es erlaubt, gegebenenfalls dünne Schichten übereinanderzulegen.

Im Anschluß an das Mischverfahren wird dann sinnvollerweise zunächst erst der Verfestigungsmechanismus (z.B. chemische Reaktion von Alginat mit Calciumsalzen, Beaufschlagung mit Hitze, etc.) durchlaufen, um das Produkt vorzustrukturieren. Anschließend wird zu den Verfahrensbedingungen übergegangen, die die zweite viskose Masse verflüssigen, so daß diese ggf. zumindest teilweise austreten kann.

Im Falle der Herstellung eines stückigen Futtermittels auf der Grundlage einer Fleischemulsion kann dabei das Schneiden in Stücke vor, während oder nach dem Verfestigungsschritt vorgenommen werden. Für ein derartiges Produkt ist ein bevorzugter Verfestigungsschritt die chemische Reaktion von Alginat mit Calciumsalzen, die grundsätzlich aus dem Bereich der Futter- und Lebensmitteltechnologie seit Jahrzehnten gut bekannt ist.

Die stückigen Produkte, d.h. alternierend eine verfestigte Fleischemulsionsschicht und eine Schicht aus einem viskosen Gel, können dann in dieser Form und unter Zusatz.einer entsprechenden Soße (Gravy) abgepackt, z.B. eingedost werden. Beim abschließenden Sterilisationsschritt verflüssigt sich das viskose Gel und tritt weitgehend in das umgebende Medium aus, um das entsprechend erwünschte schichtförmige Material zurückzulassen, das natürlichen Fleischstücken sehr ähnlich kommt. In diesem Fall ist das Verfahren besonders ökonomisch, da der Verflüssigungsschritt während eines in jedem Fall zu durchlaufenden Verfahrensschrittes, nämlich der Sterilisation, automatisch mitdurchlaufen wird.

Selbstverständlich ist das erfindungsgemäßen Verfahren nicht auf die beiden detaillierter beschriebenen Anwendungsbereiche beschränkt, sondern kann überall dort Anwendung finden, wo entsprechende schichtartige Produkte hergestellt werden sollen, sofern es möglich ist, zwei wesentliche Grundbedingungen zu erfüllen, nämlich zum eine in etwa gleiche Viskosität für den Mischschritt einzustellen, da es ansonsten schwierig ist, eine entsprechende Schichtung der Materialien zu erreichen, und zum anderen die Zusammensetzung der Materialströme so auswählen zu können, daß der eine Materialstrom sich unter entsprechenden Verfahrensbedingungen verfestigt und sich der andere Materialstrom unter entsprechenden Verfahrensbedingungen verflüssigt, wobei diese Verfahrensbedingungen nicht notwendigerweise identisch sein müssen, wie beispielsweise Beaufschlagung mit Hitze, aber zumindest sichergestellt werden muß, daß die Verfahrensbedingungen, die zur Verfestigung des einen Materialsstroms führen, den anderen Materialstrom nicht so verändern, daß eine spätere Verflüssigung verhindert würde.

Zur weiteren Veranschaulichung der Erfindung wird im folgenden das besonders bevorzugte Mischverfahren näher beschrieben werden, mit dem es in optimaler Weise gelingt, unterschiedliche viskose Massen übereinanderzuschichten. Dieses Verfahren wird mit Hilfe der beigefügten Zeichnungen näher erläutert, in denen
Fig. 1 die Ansicht eines Längsschnitts einer Vor-richtung zur Durchführung des erfindungsgemäßen Verfahrens und
Fig. 2 eine Ansicht des Rotors der Vorrichtung nach Fig. 1 von unten
zeigt.

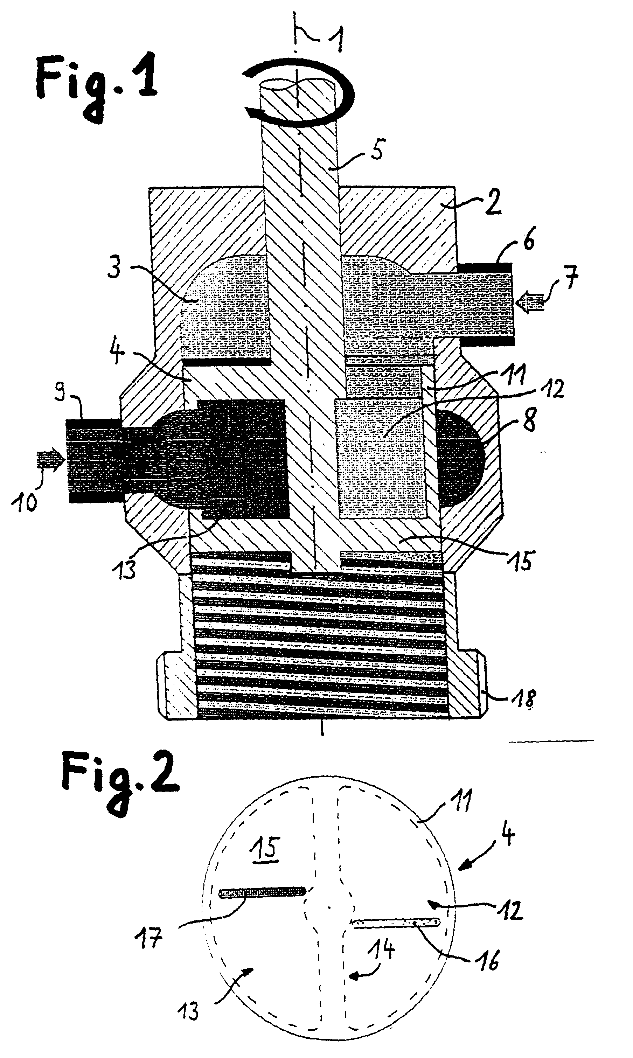

Fig. 1 zeigt eine schematische Schnittansicht einer erfindungsgemäßen Vorrichtung entlang einer Längsachse 1. Ein Gehäuse 2 weist einen zylindrischen Innenraum auf, in dem ein ebenfalls zylindrischer Rotor 4 drehbar gehalten ist, wobei die Außenwand des Rotors mit der Innenwand des Gehäuses eine im wesentlichen abdichtende Führung bildet. Der Rotor kann über eine Welle 5, die nach oben aus dem Gehäuse herausgeführt ist, in Drehung um die Achse 1 versetzt werden.

Das obere Ende des zylindrischen Innenraums bildet oberhalb des Rotors 4 eine ringförmige (erste) Verteilkammer 3, die mit einer im wesentlichen radial angeordneten (ersten) Zuführung 6 verbunden ist, durch die fließfähiges Material in Richtung des Pfeils 7 zugeführt werden kann.

Das Gehäuse 2 weist in seinem mittleren Bereich eine (zweite) ringförmige Verteilkammer 8 auf, die den Rotor umgibt und an die eine im wesentlichen radial verlaufende Zuführung 9 angeschlossen ist, über die in Richtung des Pfeils 10 fließfähiges Material in die Kammer 8 eingeleitet werden kann.

Wie Fig. 2 zeigt, die eine Ansicht des zylindrischen Rotors 4 von unten bzw. auf dessen Boden 15 zeigt, ist der Rotor im wesentlichen hohl und besitzt innerhalb seiner zylindrischen Außenwand 11 (gestrichelt) eine erste 12 und eine zweite Abgabekammer 13, die jeweils nahezu die Hälfte des Umfangs bzw. des Innenraums einnehmen und durch eine senkrechte Trennwand 14 (gestrichelt) gegeneinander abgegrenzt sind.

Gemäß Fig. 1 steht die Kammer 12 an ihrem oberen Ende über ihre ganze Querschnittsfläche mit der ersten Verteilkammer 3 in Verbindung, und zwar in jeder Drehstellung des Rotors, da sich die Verteilkammer 3 ringförmig über den gesamten Umfang erstreckt. Entsprechendes gilt für die Kammer 13, die über eine in Fig. 2 nicht dargestellte, aber in Fig. 1 erkennbare Öffnung mit der zweiten Verteilkammer 8 in Verbindung steht. Da die Verteilkammer 8 ebenfalls ringförmig ist, steht die Kammer 13 in jeder Drehstellung des Rotors mit dieser in Verbindung. Darüber hinaus stehen, wie bereits oben angedeutet, die Kammern 3 und 8 jeweils mit einem Zulauf 7, 9 in Verbindung. Die auf diese Weise gebildeten, zusammenhängenden Volumenbereiche sind in Fig. 1 hell (6, 3, 12) bzw. dunkel (9, 8, 13) gemustert dargestellt.

Die in Fig. 2 dargestellten Auslaßöffnungen 16, 17 im Boden 15 des Rotors stehen mit den Abgabekammern 12, 13 in Verbindung, wobei die Öffnung 16 der Kammer 12 und die Öffnung 17 der Kammer 13 zugeordnet ist.

In einer alternativen Ausführungsform könnten die Kammern 12, 13 im Querschnitt den Auslaßöffnungen 16, 17 entsprechen und beispielsweise als schlitzförmige Ausnehmungen innerhalb des Rotors ausgeführt sein. Auch ein Reihe von in Radialrichtung nebeneinander und parallel zur Längsachse liegender Bohrungen ist möglich.

Nachfolgend sei auf die Funktionsweise der erfindungsgemäßen Vorrichtung eingegangen. Im Betrieb wird der Rotor 4 über seine aus dem Gehäuse 2 herausragende Welle 5 in Drehung versetzt. Dabei besteht aufgrund der erläuterten Anordnung der Kammern jeweils eine durchgehende Verbindung von der ersten Zuführung 7 über die Kammern 3, 12 bis zur Auslaßöffnung 16 einerseits und von der zweiten Zuführung 9 über die Kammern 8, 13 bis zur Auslaßöffnung 17 andererseits. Durch die Zuführungen 6, 9 werden nun beispielsweise die erwähnte Fleischemulsionen bzw. das viskose Gel in die Kammern zugeführt. Die zugeführten Materialien gelangen nach Durchlaufen der Anordnung kontinuierlich zu den Auslaßöffnungen 16 und 17, durch die sie in die Fortsetzung des zylindrischen Innenraums des Gehäuses 2 unterhalb des Rotorbodens 15 austreten. Aufgrund des kontinuierlichen Durchsatzes der beiden Materialströme und der Drehung der Auslaßöffnungen bilden die austretenden Materialmassen Schichten, die sich spiralförmig abwechselnd übereinanderlegen, wie Fig. 1 im unteren Teil zeigt.

Über die Einstellung der Drehgeschwindigkeit des Rotors 4 sowie des Durchsatzes der Materialströme kann die Schichtdicke der einzelnen Lagen gesteuert werden. Weiterhin kann die Schichtdicke und die sonstige Struktur des Materials über die Abmessungen der Auslaßöffnungen 16, 17 verändert werden. Weitere Variationsmöglichkeiten bestehen darin, mehr oder weniger schmale Schlitze oder auch Lochreihen als Austrittsflächen vorzusehen.

Darüber hinaus können innerhalb des Rotors nicht nur zwei, sondern eine höhere Anzahl von Abgabekammern vorgesehen sein. Beispielsweise könnte eine gerade Anzahl von Kammern vorhanden sein, die alternierend über die stationäre Kammer 3 oberhalb des Rotors und die Ringkammer 8 um den Rotor herum mit Material versorgt werden.

Selbstverständlich ist es auch möglich, das erfindungsgemäße Prinzip dahingehend zu erweitern, daß innerhalb des Rotors drei oder mehr Kammern vorgesehen sind, die beispielsweise durch mehrere übereinander angeordnete Ringkammern nach Art der Kammer 8 sowie eine obenliegende Kammer nach Art der Kammer 3 mit Material versorgt werden, wobei dann auch mehr als zwei unterschiedliche Zuführungen mit unterschiedlichem Material möglich sind. Auch bei einer solchen Bauform könnten im Rotor mehrere Abgabekammern für jeweils eine Ring- bzw. Verteilkammer vorgesehen sein.

Der aus der Vorrichtung gemäß Fig. 1 am unteren Ende austretende Materialstrom kann bereits in dieser Form unmittelbar weiterverarbeitet werden. Eine vorteilhafte Variante besteht jedoch darin, daß dem zylindrischen Abgaberaum unmittelbar unterhalb des Rotors 4, beispielsweise über einen Gewindeanschluß 18, eine Ausformdüse nachgeschaltet ist, wobei der die Vorrichtung verlassende Materialstrom eine definierte Querschnittsveränderung erfährt. Zunächst könnte lediglich die Form des Querschnitts verändert werden. Weiter könnte die Ausformdüse dem Materialstrom eine Querschnittsverjüngung bzw. -erweiterung aufzwingen, wobei die Schichtdicken des vorgebildeten Materials gezielt verändert werden können. Insbesondere ist es dadurch möglich, feinste Lagen auszubilden, wie es mit gegenwärtigen Verfahren nicht bzw. nicht in befriedigender Weise möglich ist.

Im folgenden wird ausführlicher die Herstellung stückiger Futtermittel auf der Basis von Fleischemulsion beschrieben werden.

Mit dem oben allgemein beschriebenen Mischungsverfahren werden in der bevorzugten Ausführungsform der Erfindung zwei Materialströme A und B zusammengeführt, die folgende Zusammensetzung aufweisen:

**TABELLE 1**

| Zusammensetzung Materialstrom A (Gel) | | |
|---|---|---|
| Bestandteile | Bereich | bevorzugt |
| Carboxymethylcellulose | 1-20 Gew.-% | 4 Gew.-% |
| Calciumlactat | 0,0-10 Gew.-% | 2 Gew.-% |
| Wasser | 70-98,5 Gew.-% | 94 Gew.-% |

**TABELLE 2**

| Zusammensetzung Materialstrom B (Emulsion) | | |
|---|---|---|
| Bestandteile | Bereich | bevorzugt |
| Fleisch- oder Fischmaterialien | 30-60 Gew.-% | 48 |
| Weizenmehl oder Maisstärke | 10-30 Gew.-% | 20 |
| Faserhaltiges Material | 5-12 Gew.-% | 8 |
| sonstige Zusatzstoffe (Vitamine, Mineralmischung, etc.) | 1-10 Gew.-% | 6 |
| Wasser | 10-30 Gew.-% | 18 |

Materialstrom A ergibt das viskose Gel. Er wird vor Zuführung zu der oben detaillierter dargestellten Vorrichtung (im weiteren ITN-Mischkopf) in einer herkömmlichen Mischvorrichtung (oder in einem adäquaten kontinuierlichen Verfahren) mit heißem Wasser hergestellt, um eine maximale Viskosität zu erreichen. Er enthält in der unten detaillierter beschriebenen bevorzugten Ausführungsform Calciumlactat als eine leicht verfügbare Quelle für Calcium-Ionen, um sicherzustellen, daß die im ITN-Mischkopf erzeugte Struktur schnell fixiert wird.

Materialstrom B wird ebenso in einer herkömmlichen Mischvorrichtung (oder in einem adäquaten kontinuierlichen Verfahren) hergestellt, und das Ergebnis ist eine Emulsion auf der Grundlage von Fleisch- oder Fischmaterialien, die in der Ausführungsform von Beispiel 1 direkt dem ITN-Mischkopf zugeführt werden kann. In der Ausführungsform von Beispiel 2 wird Materialstrom B vor Zuführung zum ITN-Mischkopf in einem Hochleistungsmischer mit einer wässrigen Natriumalginat-Lösung vermischt.

### BEISPIEL 1

Ein viskoses Gel wird hergestellt, wie oben beschrieben. Im vorliegenden Ausführungsbeispiel wird als gelbildende Substanz eine Carboxymethylcellulose verwendet, die bei niedriger Konzentration eine hohe Viskosität ergibt, nämlich Blanose 7H4CF von der Firma Aqualon/Hercules. 4 Gew.-% Carboxymethylcellulose-Pulver und 2,0 Gew.-% Calciumlactat werden mit 94 Gew.-% heißem Wasser gemischt. Das viskose Gel wird mit einer Geschwindigkeit von 6 kg/min unter Verwendung einer Mohno-Pumpe in den ITN-Mischkopf eingebracht.

Der zweiten Kammer des ITN-Mischkopfes wird eine faserhaltige Fleischemulsion, wie oben angegeben, mit einer Geschwindigkeit von 24 kg/min zugeführt, d.h. das Gewichtsverhältnis von Gel zu Fleischemulsion beträgt 20 zu 80.

Der ITN-Mischkopf wird mit einer Geschwindigkeit von 200 UPM betrieben. Die Mischplatte des ITN-Mischkopfes hat in einer bevorzugten Ausführungsform der Erfindung einen Durchmesser von 100 mm, mit zwei parallelen Schlitzen, einer mit einer Breite von 6 mm (32 mm Länge/220 mm²) für das viskose Gel und der andere mit einer Breite von 8 mm (31 mm Länge/298 mm²) für die Fleischemulsion. Beide Schlitze haben denselben Einstellwinkel von 15° zur Längsachse des ITN-Mischkopfes, um das Gel bzw. die Emulsion, die dort hindurchgedrückt werden, radial nach außen zu führen.

Der ITN-Mischkopf führt in ein Rohr mit einem Durchmesser von 100 mm Durchmesser und einer Länge von 340 mm. Der Durchmesser von 100 mm wird auf einer Länge von 125 mm auf 65 mm Durchmesser reduziert. Bei diesem Durchmesser endet das Rohr in einer Rohrbiegung von 90°. Der entsprechende Materialstrom wird mit einer Geschwindigkeit von 30 kg/min ausgetragen. Mehrere Schichten des Materialstroms werden übereinander gepumpt, um eine Schicht mit ca. 200 mm Höhe zu bilden. Diese Schichtstruktur wird auf einem Transportband durch einen Heißdampftunnel geführt, um sich darin zu einer kohärenten Masse zu verfestigen.

Die verfestigte Masse wird anschließend in Würfel unterschiedlicher Abmessungen geschnitten. Das stückige Endprodukt wird in bekannter Weise weiterverarbeitet, beispielsweise zusammen mit einer Gravy eingedost. Entscheidend ist, daß einer der abschließenden Prozeßschritte eine Sterilisation bei üblichen Temperaturen erfolgt, um den gewünschten Effekt zu erzielen, d.h. Verflüssigung der Gelschichten, um die erwünschte faserige schichtförmige Struktur der einzelnen Stücke zu erhalten.

### BEISPIEL 2

Herstellung und Zuführung des viskosen Gels erfolgen wie in Beispiel 1. Der ähnlich zusammengesetzte Fleischemulsion (allerdings mit einem zum zugemischten Natriumalginat etwa äquimolaren Gehalt an Calciumsulfat) wird vor Zuführung zum ITN-Mischkopf in einem Hochgeschwindigkeitsmischer eine wässrige Natriumalginat-Lösung (ca. 6 Gew.-%) in einem Mischungsverhältnis von ca. 3:5 zugesetzt. Diese Mischung wird dem ITN-Mischkopf zugeführt, wie in Beispiel 1 beschrieben.

Die aus dem an den ITN-Mischkopf anschließenden Prozeßrohr ausgetragene Schichtstruktur verfestigt sich durch die chemische Reaktion des Natriumalginats mit dem Calciumsulfat in der Fleischemulsion ohne eine weitere Wärmebehandlung wie in Beispiel 1. Die Weiterverarbeitung der verfestigten Schichtstruktur erfolgt analog zu Beispiel 1.

## Patentansprüche

1. Verfahren zur Herstellung eines Futter- oder Lebensmittels, **dadurch gekennzeichnet, daß** mindestens ein erster Materialstrom aus einer viskosen Emulsion auf der Basis von Fleisch- und/oder Fischmaterialien oder Komponenten derselben, der sich unter entsprechenden ersten Verfahrensbedingungen verfestigt, und mindestens ein zweiter Materialstrom aus einer Masse mit einer ähnlichen Viskosität wie der erste Materialstrom, der sich unter entsprechenden zweiten Verfahrensbedingungen verflüssigt, in der Weise miteinander vermischt werden, daß sich die einzelnen Materialströme schichtweise übereinanderlegen; und daß anschließend zunächst die zur Verfestigung des ersten Materialstroms und danach die zur Verflüssigung des zweiten Materialstroms notwendigen Verfahrensbedingungen durchlaufen werden, wobei der verflüssigte zweite Materialstrom zumindest teilweise aus dem Produkt austritt.

2. Verfahren nach Anspruch 1, **dadurch gekennzeichnet, daß** der zweite Materialstrom aus einem viskosen Gel besteht.

3. Verfahren nach Anspruch 1 oder 2, **dadurch gekennzeichnet, daß** die zur Verfestigung des ersten Materialstroms notwendigen Verfahrensbedingungen ein für die Verfestigung des (der) ersten Materialstromes (Materialströme) ausreichender Zeitablauf ist.

4. Verfahren nach einem der vorangehenden Ansprüche, **dadurch gekennzeichnet, daß** die ggf. zusätzlichen, zur Verfestigung des (der) ersten Materialstromes (Materialströme) erforderlichen Verfahrensbedingungen eine Beaufschlagung mit Hitze ist.

5. Verfahren nach einem der Ansprüche 2 bis 4, **dadurch gekennzeichnet, daß** das viskose Gel durch Beaufschlagung mit Hitze in einem abschließenden Sterilisationsschritt verflüssigt wird.

6. Verfahren nach einem der vorangehenden Ansprüche, **dadurch gekennzeichnet, daß** der (die) erste(n) und der (die) zweite(n) Materialstrom (Materialströme) in einem Gewichtsverhältnis von 50:50 bis 95:5 eingesetzt werden

7. Verfahren nach Anspruch 6, **dadurch gekennzeichnet, daß** das Gewichtsverhältnis etwa 80:20 beträgt

8. Verfahren nach einem der vorangehenden Ansprüche, **dadurch gekennzeichnet, daß** der (die) erste(n) Materialstrom (Materialströme) zusätzlich faserartiges oder faserhaltiges Material enthält (enthalten).

9. Verfahren nach einem der vorangehenden Ansprüche, **dadurch gekennzeichnet, daß** der erste Materialstrom oder mindestens einer der ersten Materialströme Alginat und mindestens ein Calciumsalz in etwa äquimolaren Mengen enthält.

10. Verfahren nach Anspruch 9, **dadurch gekennzeichnet, daß** als Alginat Natriumalginat und als Calciumsalz Calciumsulfat eingesetzt werden

11. Verfahren nach Anspruch 10, **dadurch gekennzeichnet, daß** der entsprechende Materialstrom unmittelbar vor der Vermischung mit dem (den) zweiten Materialstrom (Materialströme) durch Vermischen einer das Calciumsalz enthaltenden Mischung und einer wässrigen Lösung des Alginats hergestellt wird.

12. Verfahren nach einem der vorangehenden Ansprüche, **dadurch gekennzeichnet, daß** das viskose Gel eine gelbildende Substanz aus der Gruppe enthält, die Carboxymethylcellulose, Guar Gum und andere Hydrocolloide umfaßt.

13. Verfahren nach Anspruch 12, **dadurch gekennzeichnet, daß** das viskose Gel Carboxymethylcellulose umfaßt.

14. Verfahren nach einem der vorangehenden Ansprüche, **dadurch gekennzeichnet, daß** das viskose Gel ein Calciumsalz enthält.

15. Verfahren nach Anspruch 14, **dadurch gekennzeichnet, daß** als Calciumsalz Calciumlactat eingesetzt wird.

16. Verfahren nach einem der vorangehenden Ansprüche, **dadurch gekennzeichnet, daß** die aus den übereinandergelegten Einzelmaterialströmen entstandene Masse nach Verfestigung in geeignete Stückgröße geschnitten wird.

17. Verfahren nach einem der vorangehenden Ansprüche, **dadurch gekennzeichnet, daß** der mindestens eine erste Materialstrom und der mindestens eine zweite Materialstrom getrennt voneinander jeweils einer in Umfangsrichtung um eine Längsachse herum verlaufenden Verteilzone zugeführt werden, wobei die Verteilzonen voneinander getrennt sind; jeder Materialstrom in mindestens eine sich an die Verteilzone jeweils anschließende Abgabezone geführt wird, wobei die Abgabezonen voneinander getrennt und nebeneinander um die Längsachse herum verteilt angeordnet sind und mit der jeweils zugeordneten Verteilzone in Verbindung stehen; die aus den Abgabezonen ausgetretenen Materialströme mit jeweils vorgegebener Querschnittsform und fläche in Längsrichtung innerhalb eines bestimmten Gesamtquerschnitts geführt werden; und die Abgabezone in ihrer Anordnung als Ganzes um die Längsachse gedreht werden, wobei sich die einzelnen Materialströme spiralförmig schichtweise übereinanderlegen.

18. Verfahren nach Anspruch 17, **dadurch gekennzeichnet, daß** die Verteilzonen im Querschnitt kreis- oder kreisringförmig sind.

19. Verfahren nach Anspruch 17, **dadurch gekennzeichnet, daß** wenigstens eine Abgabezone im Querschnitt schlitzförmig ist.

20. Verfahren nach Anspruch 17, **dadurch gekennzeichnet, daß** wenigstens eine Abgabezone im Querschnitt kreissektorförmig ist.

21. Verfahren nach einem der Ansprüche 17 bis 20, **dadurch gekennzeichnet, daß** wenigstens eine Abgabezone in eine Reihe von in Radialrichtung aufeinanderfolgenden Teilzonen aufgeteilt ist.

22. Verfahren nach einem der Ansprüche 17 bis 21, **dadurch gekennzeichnet, daß** zwei Materialströme und zwei Abgabezonen eingesetzt werden.

23. Verfahren nach einem der Ansprüche 17 bis 22, **dadurch gekennzeichnet, daß** das austretende Material in einem sich in Längsrichtung definiert verändernden Querschnitt geführt wird.

24. Futter- oder Lebensmittel, herstellbar mit einem Verfahren nach einem der vorangehenden Ansprüche.

## Claims

1. A process for producing an animal feed or a foodstuff, **characterized in that** at least one first material stream of a viscous emulsion based on meat and/or fish materials or components thereof, which solidifies under corresponding first process conditions, and at least one second material stream of a mass with a similar viscosity to that of the first material stream, which liquefies under corresponding second process conditions, are mixed together in a manner such that the individual material streams are superimposed in layers; another; and **in that** the process conditions required for solidifying the first material stream are first passed through and then the process conditions required for liquefying the second material stream are passed through, wherein the liquified second material stream at least partially escapes from the product.

2. A process according to claim 1, **characterized in that** the second material stream consists of a viscous gel.

3. A process according to claim 1 or 2, **characterized in that** the process conditions required for solidification of the first material stream(s) are a sufficient elapse of time.

4. A process according to any of any of the preceding claims, **characterized in that** the optionally additional process conditions required for the solidification of the first material stream(s) is application of heat.

5. A process according to any of claims 2 to 4, **characterized in that** the viscous gel is liquefied by application of heat in a concluding sterilization step.

6. A process according to any of the preceding claims, **characterized in that** the first material stream(s) and the second material stream(s) are employed in a ratio by weight of 50:50 to 95:5.

7. A process according to claim 6, **characterized in that** the ratio by weight amounts to approximately 80:20.

8. A process according to any of the preceding claims, **characterized in that** the first material stream(s) additionally contain(s) fibrous or fibre-containing material.

9. A process according to any of the preceding claims, **characterized in that** the first material stream or at least one of the first material streams contains alginate and at least one calcium salt in approximately equimolar amounts.

10. A process according to claim 9, **characterized in that** sodium alginate and calcium sulphate are used as the alginate and calcium salt.

11. A process according to claim 10, **characterized in that** the relevant material steam is produced directly before mixing with the second material stream(s) by mixing a mixture containing the calcium salt and an aqueous solution of the alginate.

12. A process according to any of the preceding claims, **characterized in that** the viscous gel contains a gel-forming substance from the group which comprises carboxymethylcellulose, guar gum and other hydro-colloids.

13. A process according to claim 12, **characterized in that** the viscous gel comprises carboxymethylcellulose.

14. A process according to any of the preceding claims, **characterized in that** the viscous gel contains a calcium salt.

15. A process according to claim 14, **characterized in that** calcium lactate is used as the calcium salt.

16. A process according to any of the preceding claims, **characterized in that** the mass resulting from the superimposed individual material streams is cut into suitably sized pieces after solidification.

17. A process according to any of the proceding claims, **characterized in that** the at least one first material stream and the at least one second material stream are fed separately from one another in a peripheral direction to respective distribution zones extending around a longitudinal axis, the distribution zones being separate from one another; each material stream is fed into at least one delivery zone adjoining the respective distribution zone, the delivery zones being separate from one another and distributed adjacent one another around the longitudinal axis and being in communication with the respectively associated distribution zones; the material streams emerging from the delivery zones are fed in the longitudinal direction with respective predetermined cross-sectional shapes and areas within a predetermined overall cross-section; and the delivery zones are turned as an entity about the longitudinal axis, whereby the individual material streams are superimposed in spiral form in layered manner.

18. A process according to claim 17, **characterized in that** the distribution zones are of circular or annular form in cross-section.

19. A process according to claim 17, **characterized in that** at least one delivery zone is of slit form in cross-section.

20. A process according to claim 17, charactedzed in that at least one delivery zone has the shape of a sector of a circle in cross-section.

21. A process according to any of claims 17 to 20, **characterized in that** at least one delivery zone is divided into a series of sub-zones following each other in the radial direction.

22. A process according to any of claims 17 to 21, **characterized in that** two material streams and two delivery zones are utilized.

23. A process according to any of claims 17 to 22, **characterized in that** the emerging material is fed with a cross-section changing in the longitudinal direction in a defined way.

24. Animal feed or a foodstuff producible by a process according to any of the preceding claims.

## Revendications

1. Procédé de préparation d'un agent de fourrage ou alimentaire, **caractérisé en ce que** l'on mélange l'un avec l'autre, au moins un premier courant de matière d'une émulsion visqueuse à base de viande et/ou de poisson ou de leurs composants, qui se solidifie sous des premières conditions appropriées de procédé, et au moins un deuxième courant de matière à partir d'une masse de viscosité similaire à celle du premier courant de matière, qui se liquéfie sous des deuxièmes conditions appropriées de procédé, de telle sorte que les courants individuels de matière se superposent en couches ; et qu'ensuite les conditions de procédé nécessaires d'abord à la solidification du premier courant de matière et ensuite, à la liquéfaction du deuxième courant de matière sont réalisées, où le deuxième courant de matière liquéfié s'échappe au moins partiellement du produit.

2. Procédé selon la revendication 1, **caractérisé en ce que** le deuxième courant de matière consiste en un gel visqueux.

3. Procédé selon la revendication 1 ou 2, **caractérisé en ce que** les conditions de procédé nécessaires à la solidification du premier courant de matière sont une période suffisante pour la solidification du ou des premiers courants de matière.

4. Procédé selon l'une quelconque des revendications précédentes, **caractérisé en ce que** les conditions de procédé, le cas échéant supplémentaires, nécessaires à la solidification du ou des premiers courants de matière sont une alimentation en chaleur.

5. Procédé selon l'une quelconque des revendications 2 à 4, **caractérisé en ce que** le gel visqueux est liquéfié par alimentation en chaleur dans un étape finale de stérilisation.

6. Procédé selon l'une quelconque des revendications précédentes, **caractérisé en ce que** le ou les premiers et le ou les deuxièmes courants de matière sont mis en oeuvre en un rapport pondéral allant de 50:50 à 95:5.

7. Procédé selon la revendication 6, **caractérisé en ce que** le rapport pondéral s'élève à environ 80:20.

8. Procédé selon l'une quelconque des revendications précédentes, **caractérisé en ce que** le ou les premiers courants de matière contiennent en outre, un matériau fibreux ou contenant des fibres.

9. Procédé selon l'une quelconque des revendications précédentes, **caractérisé en ce que** le premier courant de matière ou au moins l'un des premiers courants de matière contient de l'alginate et au moins un sel de calcium en des quantités environ équimolaires.

10. Procédé selon la revendication 9, **caractérisé en ce que** l'on met en oeuvre comme alginate, l'alginate de sodium et comme sel de calcium, le sulfate de calcium.

11. Procédé selon la revendication 10, **caractérisé en ce que** le courant de matière approprié est préparé directement avant le mélange avec le ou les deuxièmes courants de matière, par mélange d'une mixture contenant le sel de calcium et d'une solution aqueuse de l'alginate.

12. Procédé selon l'une quelconque des revendications précédentes, **caractérisé en ce que** le gel visqueux contient une substance formant gel du groupe qui comprend la carboxyméthylcellulose, la gomme de cyamopsis et d'autres hydrocolloïdes.

13. Procédé selon la revendication 12, **caractérisé en ce que** le gel visqueux comprend de la carboxyméthylcellulose.

14. Procédé selon l'une quelconque des revendications précédentes, **caractérisé en ce que** le gel visqueux contient un sel de calcium.

15. Procédé selon la revendication 14, **caractérisé en ce que** l'on met en oeuvre comme sel de calcium, le lactate de calcium.

16. Procédé selon l'une quelconque des revendications précédentes, **caractérisé en ce que** la masse formée à partir des courants individuels de matière superposés, est coupée en une taille appropriée des morceaux, après la solidification.

17. Procédé selon l'une quelconque des revendications précédentes, **caractérisé en ce que** le au moins un premier courant de matière et le au moins un deuxième courant de matière sont amenés séparément l'un de l'autre, chaque fois dans une zone de distribution se développant dans la direction de la circonférence autour d'un axe longitudinal, où les zones de distribution sont séparées les unes des autres ; chaque courant de matière est amené dans au moins une zone de dégagement se rattachant chaque fois à la zone de distribution, où les zones de dégagement sont séparées les unes des autres et disposées l'une à côté de l'autre, réparties autour de l'axe longitudinal et sont en connexion avec la zone de distribution chaque fois rattachée ; les courants de matière s'échappant des zones de dégagement, avec chaque fois, une forme et une surface en coupe transversale déterminées, sont amenés dans la direction longitudinale en une section totale déterminée ; et les zones de dégagement dans leur disposition, sont tournées comme un tout autour de l'axe longitudinal, où les courants individuels de matière se superposent en couches, en forme de spirale.

18. Procédé selon la revendication 17, **caractérisé en ce que** les zones de distribution ont la forme de cercle ou de couronne en coupe transversale.

19. Procédé selon la revendication 17, **caractérisé en ce qu'**au moins une zone de dégagement est en forme de fente en coupe transversale.

20. Procédé selon la revendication 17, **caractérisé en ce qu'**au moins une zone de dégagement est en forme de secteur de cercle en coupe transversale.

21. Procédé selon l'une quelconque des revendications 17 à 20, **caractérisé en ce qu'**au moins une zone de dégagement est divisée en une série de zones partielles successives dans la direction radiale.

22. Procédé selon l'une quelconque des revendications 17 à 21, **caractérisé en ce que** deux courants de matière et deux zones de dégagement sont mis en oeuvre.

23. Procédé selon l'une quelconque des revendications 17 à 22, **caractérisé en ce que** le matériau formé est fourni avec une coupe transversale se modifiant de manière définie dans la direction longitudinale.

24. Agent de fourrage ou alimentaire, pouvant être préparé par un procédé selon l'une quelconque des revendications précédentes.
